# EUROPEAN PATENT APPLICATION

(11) **EP 4 748 786 A2**
(43) Date of publication of application: **27.05.2026**
(21) Application number: 26171703.7
(22) Date of filing: 18.02.2020
(51) Int. Cl.: C01B 3/38

(54) **METHOD AND SYSTEM FOR RECOVERING HYDROGE N AND CONVERTING A CARBON COMPOUND TO A VALUABLE ORGANIC PRODUCT**

(30) Priority: 18.02.2019 US 201962807004 P
(62) Divisional of application: 20759629.7
(71) Applicant: Skyre, Inc., East Hartford, CT 06108 (US)
(72) Inventor: MOLTER, Trent M., Hartford (US); ROY, Robert, Hartford (US)
(74) Representative: Studio Torta S.p.A.

(57) **Abstract**

In an aspect a method of recovering hydrogen, the method comprises reacting a hydrocarbon to form a carbon compound and hydrogen in the presence of a catalyst, wherein the carbon compound comprises at least one of carbon dioxide or carbon monoxide; separating the carbon compound from the hydrogen; directing the carbon compound to a cathode side of an electrochemical cell and directing water to an anode side of the electrochemical cell; electrolyzing the water on the anode side to form oxygen and protons; applying a voltage to a membrane and electrode assembly in the electrochemical cell to cause the protons to traverse through a proton exchange membrane from an anode to a cathode on the cathode side; and reacting the protons with the carbon compound to form an organic product.

## Description

### CROSS-REFERENCE TO TECHNICALLY RELATED APPLICATION

This application claims the benefit of U.S. Provisional Patent Application Serial No. 62/807,004 filed February 18, 2019. The related application is incorporated herein in its entirety by reference.

### BACKGROUND

Hydrogen is used throughout a petrochemical refinery in various hydrotreating processes, including hydrosulfurization, where sulfur is removed from the fuel and converted to elemental sulfur; hydroisomerization, where normal paraffins are converted into isoparaffins; dearomatisation, where aromatics are hydrogenated to cycloparaffins or alkanes; and hydrocracking, where long-chain hydrocarbons are cracked to shorter chains in the gasoline range. The hydrogen produced during various stages of the refining process can be collected and delivered to the specific hydrotreating process of the plant. However, as the need for cleaner-burning fuels continues to grow and improved efficiencies of the refining operation becomes a necessity, the hydrogen demand is increasingly exceeding the production rate provided by the refining process. As a result, refineries have had to supplement their hydrogen on-site supply by a number of different methods, including: steam reforming of methane or other hydrocarbons; recovery from refinery off-gases; recovery from syngas; and gasification of oil refining residues.

Currently, refineries often dispose of waste gas streams comprising hydrogen to the atmosphere and the hydrogen contained therein is lost. Hydrogen is a valuable component in forming petrochemical products and new recovery methods to sequester said hydrogen are therefore desirable.

### BRIEF SUMMARY

Disclosed herein is a method and system for recovering hydrogen and converting a carbon compound to a valuable organic compound.

In an aspect a method of recovering hydrogen, the method comprises reacting a hydrocarbon to form a carbon compound and hydrogen in the presence of a catalyst, wherein the carbon compound comprises at least one of carbon dioxide or carbon monoxide; separating the carbon compound from the hydrogen; directing the carbon compound to a cathode side of an electrochemical cell and directing water to an anode side of the electrochemical cell; electrolyzing the water on the anode side to form oxygen and protons; applying a voltage to a membrane and electrode assembly in the electrochemical cell to cause the protons to traverse through a proton exchange membrane from an anode to a cathode on the cathode side; and reacting the protons with the carbon compound to form an organic product.

In another aspect, a method comprises directing an off-gas stream from a refinery comprising a carbon compound and hydrogen to an anode side of an electrochemical hydrogen separator; applying a voltage to a separation unit membrane and electrode assembly in the electrochemical hydrogen separator to cause the hydrogen at a separation unit anode to disassociate into protons and electrons and directing the protons from the separation unit anode through a separation unit proton exchange membrane to a separation unit cathode, wherein the protons recombine with the electrons at the separation unit cathode to form hydrogen; removing the hydrogen from a separation unit cathode side of the electrochemical hydrogen separator; removing a separated carbon stream from the separation unit anode side.

In another aspect, a hydrogen recovery system comprises a reformer in fluid communication with a hydrocarbon source via a hydrocarbon stream and a reactant source; wherein the reformer is capable of reacting a hydrocarbon from the hydrocarbon source to form hydrogen and a carbon compound comprising at least one of carbon dioxide and carbon monoxide; a separation unit in fluid communication with the reformer via a reformate stream; wherein the separation unit is capable of separating the hydrogen from the carbon compound of reformate stream and wherein the hydrogen is recovered from the separation unit via a hydrogen stream; an electrochemical cell in fluid communication with the separation unit via a separated carbon stream comprising the carbon compound; wherein the electrochemical cell comprises a cathode at a cathode side of a proton exchange membrane and an anode at an anode side of the proton exchange membrane; wherein the separated carbon stream is in fluid communication with the cathode side of the electrochemical cell and a water stream is in fluid communication with the anode side of the electrochemical cell; wherein the electrochemical cell is capable of reacting the carbon compound with protons that are supplied from the protons separated at the anode from water stream to form an organic product at the cathode.

The above described and other features are exemplified by the following figures, detailed description, and claims.

### BRIEF DESCRIPTION OF THE DRAWINGS

The following Figures are exemplary aspects, which are provided to illustrate the present disclosure. The figures are illustrative of examples of the disclosure, which are not intended to limit devices made in accordance with the disclosure to the materials, conditions, or process parameters set forth herein.
FIG. 1 is an illustration of an aspect of a system for recovering hydrogen and converting a carbon compound to a valuable organic compound;
FIG. 2 is an illustration of an aspect of a system for recovering hydrogen and converting a carbon compound to a valuable organic compound; and
FIG. 3 is an illustration of an aspect of a system for recovering hydrogen.

### DETAILED DESCRIPTION

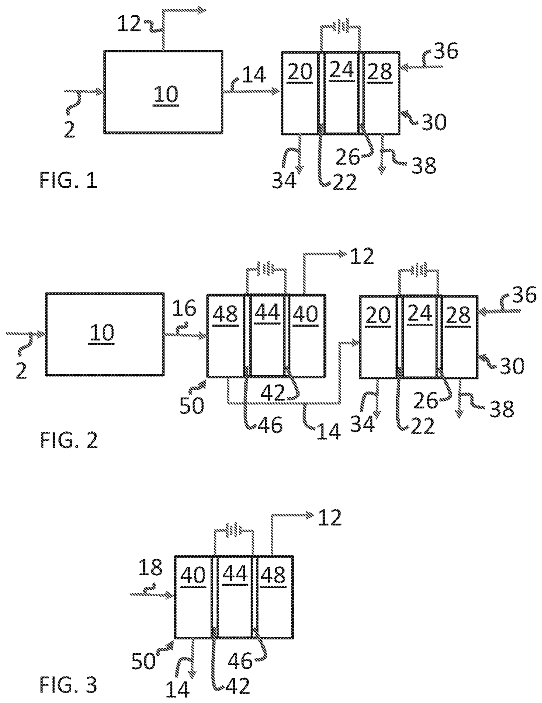

A method of recovering hydrogen was developed and is illustrated in FIG. 1, where a hydrocarbon stream 2 is directed to a reformer 10, the reformate is separated to a recovered hydrogen stream 12 and a separated carbon stream 14, and the separated carbon stream 14 from the reformer is directed to an electrochemical cell 30 to form an organic product stream 34 and an oxygen stream 38. The method has the added bonus that if the electrochemical cell 30 is powered via a renewable energy source such as a photovoltaic cell, then carbon credits can be collected.

The hydrocarbon stream 2 can comprise at least one of a natural gas, a biogas, or a refinery feedstock. The hydrocarbon stream 2 can comprise at least one of methane, ethane, ethylene, propane, propylene, butane, butadiene, cyclohexane, benzene, or toluene. The hydrocarbon stream 2 can further comprise a sulfur-containing gas (for example, like hydrogen sulphide), nitrogen, helium, carbon dioxide, water, odorants, or a metal (for example, mercury). It is noted that the sulfur-containing gases can be removed prior to the reforming, preferably to reduce the sulfur content to an amount of less than 1 part per million by volume. The hydrocarbon stream 2 can comprise methane in an amount of greater than or equal to 75 mole percent, or 80 to 97 mole percent based on the total moles of the hydrocarbon stream 2.

The hydrocarbon stream 2 can be directed to reformer 10, where the hydrocarbon stream 2 can be reacted by steam reforming, partial oxidation, CO₂ reforming, or by an auto-thermal reforming reaction to form a reformate comprising hydrogen and at least one of carbon monoxide or carbon dioxide. The reformer 10 can comprise a reforming catalyst to catalyze the reaction. The reforming catalyst can comprise an oxide of at least one of lanthanum (La), calcium (Ca), potassium (K), tungsten (W), copper (Cu), aluminum (Al), nickel (Ni), or manganese (Mn). The reforming catalyst can comprise an oxide of manganese. The reforming catalyst can be a formed catalyst (for example, a pellet, an extrudate, a ring, a sphere, or a tablet) comprising a support. The support can comprise at least one of as alumina (such as Al₂O₃), magnesia (such as MgO), silica, titania, or zirconia.

The reformate can be formed in a steam methane reformer by converting the hydrocarbon, for example, methane via Equations (1) and (2).

CH₄ + H₂O ⇆ CO + 3H₂ (1)

CO + H₂O ⇆ CO₂ + H₂ (2)

The reformate can be formed in an autothermal reformer by converting the hydrocarbon, for example, methane via Equations (3) and (4).

2CH₄ + O₂ + CO₂ → 3H₂ + 3CO + H₂O (3)

4CH₄ + O₂ + 2H₂O → 10H₂ + 4CO (4)

Hydrogen can be separated from the reformate via pressure swing adsorption, for example, with a molecular sieve. The pressure swing adsorption can adsorb impurities from the reformate to form a hydrogen stream 12 and a separated carbon stream 14.

Hydrogen can be separated from the reformate using an electrochemical hydrogen separator 50 as illustrated in FIG. 2. FIG. 2 illustrates that the reformate stream 16 can be directed to the anode side 48 of the electrochemical hydrogen separator 50. At the anode 46, the hydrogen is split into protons and electrons by the electrochemical reaction (5).

H₂ → 2H⁺ + 2e⁻ (5)

The protons formed from the reaction (5) can be driven across the proton exchange membrane 44 due to the polarity of the voltage applied and the electrons formed from reaction (5) can be bussed through an external circuit. The protons driven through the proton exchange membrane 44 can then be combined at the cathode side 40 of the membrane and electrode assembly with the electrons being bussed from the external circuit by the electrochemical reaction (6).

2H⁺ + 2e⁻ → H₂ (6)

An amount of water can be dragged across the proton exchange membrane 44 by the hydrogen. The condensed water in liquid form can be recovered from the system via a water conduit on the cathode side 40 of the electrochemical hydrogen separator 50. The removed water can be recycled back to the reformer 10 or can be directed to an anode side of the electrochemical cell 30.

FIG. 3 illustrates that in addition to or instead of directing reformate stream 16 to the electrochemical hydrogen separator 50, an off-gas stream 18 can be directed to the electrochemical hydrogen separator 50. The off-gas stream 18 can be any stream recovered from a process that comprises an amount of hydrogen to be separated. The separated carbon stream 14 can likewise be directed to the electrochemical cell 30.

The separated carbon stream 14 can be directed to the cathode side 20 of the electrochemical cell 30. Water can be fed to the anode side 28 of the electrochemical cell 30, where the water is electrolyzed to form oxygen gas and protons. The protons traverse through the proton exchange membrane 24 from the anode 26 to the cathode 22. On the cathode side 20, the protons react with the carbon compound in the separated carbon stream 14 to form an organic product. The organic product can comprise at least one of methane, carboxylic acid (for example, formic acid), an alcohol (for example, methanol or ethanol), formaldehyde, or carbon monoxide. The organic product can be recovered from the cathode side 20 via organic product stream 34.

The figures further illustrate that a power source can be used to apply a voltage to the respective electrochemical cells. The applied voltage can be less than or equal to 1 volt (V), or less than or equal to 0.8 volts, less than or equal to 0.5 volts, or 0.01 to 0.2 volts. The power source can be a solar array, a direct current (DC) source, a windmill, a battery (for example, a flow battery), a fuel cell, etc.

The respective electrodes of the electrochemical cell 30 and the electrochemical hydrogen separator 50 can be independently in direct physical contact with the proton exchange membrane 24 or 44 and can cover 90 to 100% of the respective surface areas of the proton exchange membrane 24 or 44. Each electrode independently comprises a catalyst layer. The catalyst layer can be selected to perform the desired reaction. The catalyst layer can comprise at least one of platinum, palladium, rhodium, carbon, gold, tantalum, tungsten, ruthenium, iridium, osmium, or silver. The catalyst can comprise a bound catalyst. The electrochemical cell 30 can comprise a catalyst layer comprising at least one of a metal (for example, at least one of indium, tin, lead, or an oxide thereof), a phthalocyanine (for example comprising at least one of nickel, iron, or cobalt), or a metal hydrate (for example, comprising at least one of palladium or copper). The binder can comprise at least one of a fluoropolymer, a proton-conducting ionomer, or a particulate carbon. The catalyst and optional binder can be deposited directly onto the surfaces of the proton exchange membrane. The catalyst can be disposed on a gas diffusion layer such that it is located throughout the gas diffusion layer or on a surface of the gas diffusion layer that is in contact with the proton exchange membrane. The gas diffusion layer can be porous. The gas diffusion layer can be a mesh. The gas diffusion layer can comprise a graphitic material. The gas diffusion layer can comprise a plurality of fibers such as carbon fibers. The gas diffusion layer can be electrically conductive.

The respective proton exchange membranes can each independently comprise an electrolyte such as at least one of a proton-conducting ionomer or an ion exchange resin. The proton conducting ionomer can comprise a polymer complexed with at least one of an alkali metal salt, an alkali earth metal salt, a protonic acid, or a protonic acid salt. The complexed polymer can comprise at least one of a polyether, polyester, polyimide, or a polyoxyalkylene (such as poly(ethylene glycol), poly(ethylene glycol monoether), or poly(ethylene glycol diether)).

The proton exchange membrane 44 and 24 can comprise the same or different material. For example, the proton exchange membrane can comprise an ionomer-type polyelectrolyte comprising an amount of ionic groups on a hydrophobic backbone or on pendent groups off of the hydrophobic backbone such as a hydrocarbon- and fluorocarbon-type resin. The hydrocarbon-type ion-exchange resin can comprise at least one of a phenolic resin or a polystyrene. The hydrocarbon-type ion-exchange resin can be sulfonated, for example, a sulfonated poly(xylene oxide). The hydrocarbon-type ion-exchange resin can comprise a proton conducting molecule, for example, at least one of a fullerene molecule, a carbon fiber, or a carbon nanotube. The proton conducting molecules can comprise proton dissociation groups, for example, least one of -OSO₃H, -OPO(OH)₂, -COOH, -SO₃H, -C₆H₄, -SO₃H, or -OH. The proton conducting molecules alone can form the proton exchange membrane or can be present as a mixture with a binder polymer such as at least one of a fluoropolymer (for example, polyfluoroethylene or poly(vinylidene fluoride)) or poly(vinyl alcohol). The electrochemical cell 50 can be free of oxygen in a significant amount in the proton exchange membrane, the concern for oxidation is low, and the proton exchange membrane can comprise a hydrocarbon-type ion-exchange resin.

The fluorocarbon-type ion-exchange resin can include a hydrate of at least one of tetrafluoroethylene-perfluorosulfonyl ethoxyvinyl ether or tetrafluoroethylene-hydroxylated (perfluoro vinyl ether) copolymer. The fluorocarbon-type ion-exchange resin can have at least one of a sulfonic, a carboxylic, or a phosphoric acid functionality. The fluorocarbon-type ion-exchange resin can be a sulfonated fluoropolymer (such as a lithium salt of perfluoroethylene sulfonic acid). An example of fluorocarbon-type ion-exchange resin is Nafion^{™} that is commercially available from DuPont.

Set forth below are various non-limiting aspects of the present disclosure.

Aspect 1: A method of recovering hydrogen, the method comprising: reacting a hydrocarbon to form a carbon compound and hydrogen in the presence of a catalyst, wherein the carbon compound comprises at least one of carbon dioxide or carbon monoxide; separating the carbon compound from the hydrogen; directing the carbon compound to a cathode side of an electrochemical cell and directing water to an anode side of the electrochemical cell; electrolyzing the water on the anode side to form oxygen and protons; applying a voltage to a membrane and electrode assembly in the electrochemical cell to cause the protons to traverse through a proton exchange membrane from an anode to a cathode on the cathode side; and reacting the protons with the carbon compound to form an organic product.

Aspect 2: The method of Aspect 1, wherein the reacting comprises at least one of steam reforming, partial oxidation, CO₂ reforming, or auto-thermal reforming.

Aspect 3: The method of Aspect 1, wherein the reacting comprises directing the hydrocarbon stream and water to a steam reformer and reacting the hydrocarbon with the water to form a reformate comprising the carbon compound and the hydrogen.

Aspect 4: The method of any one or more of the preceding aspects, wherein the reacting comprises directing the hydrocarbon stream, water, and carbon dioxide to an autothermal reformer and reacting the hydrocarbon, water, and carbon dioxide to form a reformate comprising the carbon monoxide and the hydrogen.

Aspect 5: The method of any one or more of the preceding aspects, wherein the hydrocarbon comprises at least one of methane, ethane, ethylene, propane, propylene, butane, butadiene, cyclohexane, benzene, or toluene.

Aspect 6: The method of any one or more of the preceding aspects, wherein the separating comprises pressure swing adsorption.

Aspect 7: The method of any one or more of the preceding aspects, wherein the separating comprises directing a reformate stream comprising the carbon compound and the hydrogen to an anode side of an electrochemical hydrogen separator; applying a voltage to a separation unit membrane and electrode assembly in the electrochemical hydrogen separator to cause the hydrogen at a separation unit anode to disassociate into protons and electrons and directing the protons from the separation unit anode through a separation unit proton exchange membrane to a separation unit cathode, wherein the protons recombine with the electrons at the separation unit cathode to form hydrogen; removing the hydrogen from a separation unit cathode side of the electrochemical hydrogen separator; and removing a separated carbon stream from the separation unit anode side.

Aspect 8: The method of Aspect 7, wherein the applying the voltage comprises applying the voltage via a renewable energy source.

Aspect 9: The method of any one or more of Aspect 7 to 8, wherein an amount of water is recovered from the separation unit cathode side of the electrochemical hydrogen separator and is used in the reacting and/or is directed to the electrochemical cell.

Aspect 10: A method, optionally of any one or more of the preceding aspects, comprising: directing an off-gas stream from a refinery comprising a carbon compound and hydrogen to an anode side of an electrochemical hydrogen separator; applying a voltage to a separation unit membrane and electrode assembly in the electrochemical hydrogen separator to cause the hydrogen at a separation unit anode to disassociate into protons and electrons and directing the protons from the separation unit anode through a separation unit proton exchange membrane to a separation unit cathode, wherein the protons recombine with the electrons at the separation unit cathode to form hydrogen; removing the hydrogen from a separation unit cathode side of the electrochemical hydrogen separator; removing a separated carbon stream from the separation unit anode side.

Aspect 11: The method of any one or more of the preceding aspects, wherein the organic product comprises at least one of methane, carboxylic acid, an alcohol, formaldehyde, or carbon monoxide.

Aspect 12: A hydrogen recovery system comprising a reformer in fluid communication with a hydrocarbon source via a hydrocarbon stream and a reactant source; wherein the reformer is capable of reacting a hydrocarbon from the hydrocarbon source to form hydrogen and a carbon compound comprising at least one of carbon dioxide and carbon monoxide; a separation unit in fluid communication with the reformer via a reformate stream; wherein the separation unit is capable of separating the hydrogen from the carbon compound of reformate stream and wherein the hydrogen is recovered from the separation unit via a hydrogen stream; an electrochemical cell in fluid communication with the separation unit via a separated carbon stream comprising the carbon compound; wherein the electrochemical cell comprises a cathode at a cathode side of a proton exchange membrane and an anode at an anode side of the proton exchange membrane; wherein the separated carbon stream is in fluid communication with the cathode side of the electrochemical cell and a water stream is in fluid communication with the anode side of the electrochemical cell; wherein the electrochemical cell is capable of reacting the carbon compound with protons that are supplied from the protons separated at the anode from water stream to form an organic product at the cathode.

Aspect 13: The system of Aspect 12, wherein the reformer is a steam reformer and wherein a water source is also in fluid communication with the steam reformer.

Aspect 14: The system of Aspect 12, wherein the reformer is an autothermal reformer and a water source and a carbon dioxide source are also in fluid communication with the autothermal reformer.

Aspect 15: The system of any one or more of Aspects 12 to 14, wherein the hydrocarbon source comprises at least one of methane, ethane, ethylene, propane, propylene, butane, butadiene, cyclohexane, benzene, or toluene.

Aspect 16: The system of any one or more of Aspects 12 to 15, wherein the separation unit is a pressure swing adsorption unit.

Aspect 17: The system of any one or more of Aspects 12 to 15, wherein the separation unit is an electrochemical hydrogen separator; wherein a hydrogen separator anode side of the electrochemical hydrogen separator is in fluid communication with the reformer; wherein the electrochemical hydrogen separator is configured to dissociate the hydrogen at the hydrogen separator anode side of the reformer and to reform the hydrogen at a hydrogen separator cathode side of the electrochemical hydrogen separator.

Aspect 18: The system of Aspect 17, wherein a renewable energy source is used to power the electrochemical hydrogen separator.

Aspect 19: The system of any one or more of Aspect 17 to 18, wherein an amount of water is recovered from the cathode side of the electrochemical hydrogen separator and is in fluid communication with at least one of the reformer or the electrochemical cell.

Aspect 20: The system of any one or more of Aspects 12 to 19, wherein an off-gas stream from a refinery is in fluid communication with the electrochemical hydrogen separator.

The compositions, methods, and articles can alternatively comprise, consist of, or consist essentially of, any appropriate materials, steps, or components herein disclosed. The compositions, methods, and articles can additionally, or alternatively, be formulated so as to be devoid, or substantially free, of any materials (or species), steps, or components, that are otherwise not necessary to the achievement of the function or objectives of the compositions, methods, and articles.

The terms "a" and "an" do not denote a limitation of quantity, but rather denote the presence of at least one of the referenced item. The term "or" means "and/or" unless clearly indicated otherwise by context. Reference throughout the specification to "an aspect", "an embodiment", "another embodiment", "some embodiments", and so forth, means that a particular element (e.g., feature, structure, step, or characteristic) described in connection with the embodiment is included in at least one embodiment described herein, and may or may not be present in other embodiments. In addition, it is to be understood that the described elements may be combined in any suitable manner in the various embodiments.

Elements such as a layer, film, region, or substrate can be "on" another element meaning that it can be directly on the other element or intervening elements can also be present or can be "directly on" another element, there are no intervening elements present.

The term "at least one of" means that the list is inclusive of each element individually, as well as combinations of two or more elements of the list, and combinations of at least one element of the list with like elements not named. The term "combination" is inclusive of blends, mixtures, alloys, reaction products, and the like. Unless defined otherwise, technical and scientific terms used herein have the same meaning as is commonly understood by one of skill in the art to which this invention belongs.

All cited patents, patent applications, and other references are incorporated herein by reference in their entirety. However, if a term in the present application contradicts or conflicts with a term in the incorporated reference, the term from the present application takes precedence over the conflicting term from the incorporated reference.

While particular embodiments have been described, alternatives, modifications, variations, improvements, and substantial equivalents that are or may be presently unforeseen may arise to applicants or others skilled in the art. Accordingly, the appended claims as filed and as they may be amended are intended to embrace all such alternatives, modifications variations, improvements, and substantial equivalents.

## Claims

1. A method of recovering hydrogen, the method comprising:
reacting a hydrocarbon to form a carbon compound and hydrogen in the presence of a catalyst, wherein the carbon compound comprises at least one of carbon dioxide or carbon monoxide;
separating the carbon compound from the hydrogen;
directing the carbon compound to a cathode side (20) of an electrochemical cell (30) and directing water to an anode side (28) of the electrochemical cell (30);
electrolyzing the water on the anode side (28) to form oxygen and protons;
applying a voltage to a membrane and electrode assembly in the electrochemical cell (30) to cause the protons to traverse through a proton exchange membrane (24) from an anode (26) to a cathode (22) on the cathode side (20); and
reacting the protons with the carbon compound to form an organic product;
wherein the reacting and the separating occur in a reformer (10) and the directing comprises directing a separated carbon stream (14) comprising the carbon compound from the reformer (10) to the electrochemical cell (30) with no intervening separator; or wherein the separating occurs in an electrochemical hydrogen separator (50).

2. The method of claim 1, wherein the reacting comprises at least one of steam reforming, partial oxidation, CO₂ reforming, or auto-thermal reforming.

3. The method of claim 1, wherein the reformer (10) is a steam reformer and wherein the reacting comprises directing the hydrocarbon and water to the steam reformer and reacting the hydrocarbon with the water to form a reformate comprising the carbon compound and the hydrogen.

4. The method of any one or more of the preceding claims, wherein the reformer (10) is an autothermal reformer and wherein the reacting comprises directing the hydrocarbon, water, and carbon dioxide to the autothermal reformer and reacting the hydrocarbon, water, and carbon dioxide to form a reformate comprising the carbon monoxide and the hydrogen.

5. The method of any one or more of the preceding claims, wherein the hydrocarbon comprises at least one of methane, ethane, ethylene, propane, propylene, butane, butadiene, cyclohexane, benzene, or toluene.

6. The method of any one or more of the preceding claims, wherein the separating comprises pressure swing adsorption.

7. The method of any one or more of the preceding claims, wherein the separating comprises directing a reformate stream (16) comprising the carbon compound and the hydrogen to an anode side (48) of the electrochemical hydrogen separator (50);
applying a voltage to a separation unit membrane and electrode assembly in the electrochemical hydrogen separator (50) to cause the hydrogen at a separation unit anode (46) to disassociate into protons and electrons and directing the protons from the separation unit anode (46) through a separation unit proton exchange membrane (44) to a separation unit cathode (42), wherein the protons recombine with the electrons at the separation unit cathode (42) to form hydrogen;
removing the hydrogen from a separation unit cathode side (40) of the electrochemical hydrogen separator (50); and
removing a separated carbon stream (14) from the separation unit anode side (48).

8. The method of claim 7, wherein the applying the voltage comprises applying the voltage via a renewable energy source.

9. The method of claim 7 or 8, wherein an amount of water is recovered from the separation unit cathode side of the electrochemical hydrogen separator and is used in the reacting and/or is directed to the electrochemical cell.

10. The method of any one or more of the preceding claims, wherein the organic product comprises at least one of methane, carboxylic acid, an alcohol, formaldehyde, or carbon monoxide.

11. A method, comprising:
directing an off-gas stream (18) from a refinery comprising a carbon compound and hydrogen to an anode side (48) of an electrochemical hydrogen separator (50);
applying a voltage to a separation unit membrane and electrode assembly in the electrochemical hydrogen separator (50) to cause the hydrogen at a separation unit anode (46) to disassociate into protons and electrons and directing the protons from the separation unit anode (46) through a separation unit proton exchange membrane (44) to a separation unit cathode (42), wherein the protons recombine with the electrons at the separation unit cathode (42) to form hydrogen;
removing the hydrogen from a separation unit cathode side (40) of the electrochemical hydrogen separator (50);
removing a separated carbon stream (14) from the separation unit anode side (48).
